# EUROPEAN PATENT SPECIFICATION

(11) **EP 2 706 231 B1**
(45) Date of publication and mention of the grant of the patent: **08.04.2015**
(21) Application number: 12382345.2
(22) Date of filing: 07.09.2012
(51) Int. Cl.: F03D 11/00, F03D 11/02, F03D 7/02

(54) **Method of operating a wind turbine**
Verfahren zum Betrieb einer Windturbine
Procédé d'exploitation d'une éolienne

(43) Date of publication of application: 12.03.2014
(73) Proprietor: ALSTOM Renewable Technologies, 38100 Grenoble (FR)
(72) Inventor: Picard, Thomas, 08029 Barcelona (ES)
(74) Representative: ZBM Patents - Zea, Barlocci & Markvardsen

(56) References cited:
- EP-A2- 2 402 603
- GB-A- 2 482 661

## Description

The present invention relates to a method of operating a wind turbine aimed at ensuring an acceptable tower clearance, and to a wind turbine suitable for performing such a method.

### BACKGROUND ART

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted, either directly or through the use of a gearbox, to a main generator through a rotor shaft. This way, the main generator produces electricity which is supplied into the electrical grid.

Wind turbines may comprise pitch systems that are employed for adapting the position of the blades to varying wind conditions by rotating each blade along its longitudinal axis. Pitch systems may be used to control the speed of the rotor, particularly above nominal (rated) wind speed, and aim at achieving an optimum speed in terms of good performance producing electricity and acceptable loads on the blades.

Most of the known wind turbines are upwind wind turbines, in which case loads on the blades generating the torque (to be transformed into electricity) also generate loads that deform the blades pushing them toward the tower. Thus, when a blade in the shadow of the tower is deformed, a possible contact between the blade and the tower can occur, which can cause a critical failure of the wind turbine. The larger the diameter of the rotor, the higher deflection of the blades can occur, this effect being potentially the most critical one during the design of the blades.

To avoid tower clearance problems, the blades can be reinforced or stiffened, but these known techniques may imply higher manufacturing costs and a higher static moment of the blades. Moreover, stiffening of the blades may increase loads in other critical components of the wind turbine, such as e.g. the blade root joint.

Tilting of the rotor is another known technique to increase tower clearance in a wind turbine. The tilt angle may be defined as the angle between a theoretical horizontal axis and the rotor shaft. A wind turbine design with a tilt angle of zero means that the rotor shaft is substantially completely horizontal. A wind turbine design with a positive tilt angle may increase the height of the hub and the tower clearance in comparison with having the rotor shaft horizontal (i.e. with a tilt angle of zero). A drawback of tilting the rotor is that the sweep area of the rotor is effectively reduced, which reduces the amount of wind power that can potentially be captured and finally transformed into electricity.

Another known way of increasing tower clearance is coning of the rotor blades. The cone angle of a blade may be defined as the angle between the rotor plane and the blade axis. Thus, the blades may be mounted with a particular cone angle, which may improve tower clearance of the wind turbine. Nevertheless, coning of the blades may increase the manufacturing costs and, as in the case of tilting, decrease the sweep area of the rotor and so reduce the amount of wind power that can potentially be captured and finally transformed into electricity.

A different way of improving tower clearance may be pre-bending of the blades. In this case, deflection of the blades due to wind loads is theoretically anticipated and the blades are designed to be pre-deformed in such a way that, during operation, they adopt a substantially optimum shape under the influence of the wind. Pre-bending of the blades may imply designs with complex geometries for the blades, which may cause higher manufacturing costs. Moreover, transport of pre-bended blades may be more expensive due to their particular geometries, since the space occupied by a number of pre-bended blades may be much larger than the same number of substantially straight (i.e. not pre-bended) blades.

GB2482661 A discloses a method of controlling a wind turbine having a tower and a rotor, the method comprising sensing air pressure within the wake of the rotor at a level where the wake impinges upon the tower, and controlling the rotor based upon the sensed air pressure. This method may further comprise monitoring surges in the sensed pressure as a blade passes the tower and inferring the clearance from characteristics associated with said surges. This method may still further comprise introducing or varying a cyclic pitch pattern of the rotor blades to reduce the lift generated in the lower part of the rotor disc in the event that the clearance approaches or falls below a predefined minimum value.

### SUMMARY OF THE INVENTION

There still exists a need for new wind turbines and methods of operating said wind turbines that resolve at least some of the above mentioned problems. This is especially the case for offshore wind turbines, which normally exhibit larger blades and, consequently, may suffer from larger blade deflections. It is an object of the present invention to fulfil such a need.

In a first aspect, the present invention provides a method of operating a wind turbine having a tower, a rotor arranged on the tower, a plurality of rotor blades, each of the blades having a pitch system for adjusting the pitch angle of the blade, and at least one azimuth sensor for detecting the position of the blades. The method comprises detecting (through the corresponding azimuth sensor) when a first blade substantially approaches the shadow of the tower, and pitching (through the corresponding pitch system) at least one other blade, which is in or approaching a position above the tower, to increase the angle of attack and wind load on said at least one other blade in such a way that an increase of the tilt angle of the rotor is caused. The method further comprises detecting (optionally with the corresponding azimuth sensor) when the first blade is substantially close to leaving the shadow of the tower, and pitching (through the corresponding pitch system) the at least one other blade to decrease the angle of attack and wind load on said at least one other blade in such a way that the previously caused increase of the tilt angle of the rotor is cancelled.

Any wind turbine is supposed to have a rotor supporting structure (including a tower and possibly other supporting elements) rigid to some extent, but not completely rigid. A key point of the proposed method is to take advantage of this more or less flexible rotor supporting structure by properly pitching some or all of its blades when predetermined situations occur. In particular, this method is based on detecting when one of the blades is approaching the shadow of the tower. Once this situation has been detected, some (one or more) other blades, which are in a position above or nearly above the tower (or nacelle), are pitched in such a way that their angle of attack and, thus, loads due to the influence of the wind are increased. The magnitude of this pitching may be such that the one or more blades are loaded to an extent that forces the rotor supporting structure to deflect in such a way that a positive tilt angle of the rotor is temporary achieved. This positive tilt angle may cause to keep the blade (in the shadow of the tower) away from the tower. This way, tower clearance may be ensured when any of the blades is in (or close to) the shadow of the tower.

It will be clear that in many examples of the present invention, the tilt angle caused by the extra loads on the blade(s) temporarily positioned above the tower (or nacelle) may be relatively small. Still, with ever increasing blade length, a small increase in tilt angle may be sufficient.

This method also comprises cancelling the caused positive tilt angle once the blade is detected to be close to leaving the shadow of the tower. This cancelling of the temporary tilt angle is achieved by pitching again the previously pitched (one or more) blades by a substantially equal but opposite amount. The main advantage of this method may be that tower clearance may be highly ensured in a conventional wind turbine, i.e. without permanent tilt and/or cone angles, without blades designed (pre-bended) according to complex geometries, without components excessively stiffened, etc. Moreover, since the tilt angle is forced only when a blade is (or close to be) in the shadow of the tower, the sweep area of the rotor may be maximum during most of the operational time.

In conclusion, this method permits having a good tower clearance in a structurally relatively simple wind turbine, which may highly reduce manufacturing and/or transport costs, and with a relatively good performance in terms of power generation.

According to embodiments of the method, detecting when the first blade is substantially close to leaving the shadow of the tower may be performed through the corresponding azimuth sensor. For example, the first blade may be considered to be substantially close to leaving the shadow of the tower when this blade is in a position corresponding to an azimuth angle of between 180° and 185°. In alternative embodiments, detecting when the first blade is substantially close to leaving the shadow of the tower may comprise counting the time elapsed from the moment at which the first blade has been detected to substantially approach the shadow of the tower, and detecting when said elapsed time is substantially equal to a predefined elapsed time. Different predefined elapsed times may be taken into account depending on the rotational speed of the rotor. Thus, in these alternative embodiments, the method may further comprise obtaining the rotational speed of the rotor, such that the predefined elapsed time to be used may be selected according to the obtained speed of the rotor.

In some embodiments, the wind turbine to be operated by the method may comprise at least three rotor blades. In this case, pitching the at least one other blade which is in or approaching a position above the tower (to increase the angle of attack and wind load on said at least one other blade) may comprise pitching at least two other blades which are in or approaching a position above the tower (to increase the angle of attack and wind load on said at least two other blades). Moreover, pitching the at least one other blade to decrease the angle of attack and wind load on said at least one other blade may comprise pitching the at least two other blades to decrease the angle of attack and wind load on said at least two other blades.

For example, a wind turbine may comprise three blades which may be coupled to a rotor hub in such a way that, during operation, whenever a first of the blades is in the shadow of the tower, the blades together form a substantially Y-shaped configuration of blades. In this and other similar cases, two blades above the tower may be pitched and extra loaded in such a way that a certain tilt angle of the rotor can be achieved. When the first blade is close to leaving the shadow of the tower, the previously performed pitching of the blades above the tower can be reversed to cancel the forced tilt angle and recover the maximum sweep area of the rotor.

In embodiments of the invention, the method may further comprise, when the first blade substantially approaches the shadow of the tower, pitching (through the corresponding pitch system) said first blade to cause a decrease of the angle of attack and wind load on said first blade. In these embodiments, the method may also comprise, when the first blade is substantially close to leaving the shadow of the tower, pitching (through the corresponding pitch system) said first blade in such a way that the previously caused decrease of the angle of attack and wind load on said first blade is cancelled.

The embodiments of the previous paragraph are based on combining both increasing loads on the blades above the tower (to cause a temporary tilt angle) and decreasing loads on the blade in the shadow of the tower. Wind loads on the blade in the shadow of the tower produces a torque opposing the torque caused by the increase of loads on the blades above the tower. Thus, this reduction of loads on the blade in the shadow of the tower may be seen as causing an extra increase of the temporary tilt angle caused by the increase of loads on the blades above the tower. Of course, this temporary extra tilting of the rotor may be cancelled by pitching again the blade (in the shadow of the tower) by an equal but opposite amount. These embodiments are thus based on causing temporary tilting (by increasing loads on the blades above the tower) and temporary extra tilting (by decreasing loads on the blade in the shadow of the tower) in a structurally simple wind turbine and keeping a maximum sweep area of the rotor during most of the operational time.

According to embodiments of the invention, the wind turbine to be operated by the method may further comprise means for obtaining, either directly or indirectly, the speed of the wind. These means may comprise e.g. LIDAR (Light Detection And Ranging) technologies, and/or one or more anemometers on the nacelle, etc., even though the speed of the wind may be derived from e.g. the speed of the rotor. Thus, the method may also comprise detecting when the obtained speed of the wind is closely above the rated (nominal) wind speed of the wind turbine, such that any of the pitching of any of the blades may be performed only when the obtained speed of the wind is detected to be closely above the rated wind speed of the wind turbine.

The rated wind speed is generally close to or corresponds to the point at which the thrust on the blades takes its substantially highest value. The risk of collision between a blade and the tower may be most significant when the thrust is maximum or around the maximum. So in some examples, the abovementioned strategies based on causing temporary tilting and optionally extra tilting may be exclusively applied when the obtained wind speed is detected to be closely above the rated wind speed. For example, the obtained wind speed may be considered to be closely above the rated wind speed when the obtained speed of the wind is between the rated wind speed and the rated wind speed plus 1 m/s, even though other ranges are possible. As it will be detailed in later descriptions, when the wind speed is below the rated wind speed, the pitch angle of the blades above the tower is supposed to be substantially equal to zero, which means that the pitch angle of said blades cannot normally be reduced (because it is zero) to increase loads on them. This is the reason why the herein called temporary tilting and optionally extra tilting strategies are proposed to be applied particularly when the wind speed is closely above (and not below) the rated wind speed. In wind turbines configured to have a rated wind speed from a situation with pitch angles greater than zero (not normal but possible), the pitch angle of the blades above the tower could also be reduced ("temporary tilting strategy") to increase loads on them when the wind speed is closely below the rated wind speed.

An important advantage of this feature may be that the herein called temporary tilting and optionally extra tilting strategies may not be necessarily applied each time a blade passes by the shadow of the tower, but said application may be performed only when the obtained wind speed is detected to be closely above the rated wind speed. This means that too much pitching of blades aimed at causing temporary tilting and optionally extra tilting may be avoided if the obtained wind speed is out of a predefined wind speed range. This restriction causes the pitch systems to suffer less wear and the rotor to have an optimal sweep area during most of the operational time while tower clearance is ensured.

In some embodiments, the method of the invention may be superposed on an individual pitch method. An individual pitch method may be aimed at e.g. controlling the speed of rotation of the rotor to maximize the performance of the wind turbine and/or reducing loads on the wind turbine when variations of the wind field in different regions of the sweep area exist, etc. In other words, embodiments of the temporary tilting and optionally extra tilting strategies proposed herein may be added to any existing pitching strategy in the wind turbine to be operated. Thus, for example, any calculated adjustment of the pitch angle of any of the blades may comprise a component derived from a speed control strategy, and/or a component derived from a strategy for reducing loads, and/or a component derived from a temporary tilting and optionally extra tilting strategy, etc.

In a second aspect of the invention a wind turbine is provided. This wind turbine comprises a tower, a rotor arranged on the tower, a plurality of rotor blades, each of the blades having a pitch system for adjusting the pitch angle of the blade, at least one azimuth sensor for detecting the position of the blades, and a control unit. This control unit is configured to perform a method of the type described hereinbefore.

As this wind turbine of this second aspect of the invention is suitable to be operated according to the method of the previously commented first aspect of the invention, the principles and advantages commented with respect to said method may also be of application to this wind turbine.

In some embodiments, the wind turbine may further comprise a rotor hub to which the blades are coupled, and a frame extending forwardly away with respect to the tower. The hub may be rotatably mounted on the frame in such a way that the frame is provided at least partially internally of the hub.

### BRIEF DESCRIPTION OF THE DRAWINGS

Particular embodiments of the present invention will be described in the following by way of non-limiting examples, with reference to the appended drawings, in which:
Figure 1 schematically illustrates a lateral view of a wind turbine and how some or all of its blades can be pitched according to embodiments of the invention;
Figure 2 schematically represents a front view of a wind turbine and how/when some or all of its blades can be pitched according to embodiments of the invention;
Figure 3 is a schematic representation similar to the one shown in Figure 1, but particularly reflecting a possible effect of pitching a blade in the shadow of the tower according to embodiments of the invention;
Figure 4 shows the view of the wind turbine of Figure 1 and how this wind turbine may behave when operated according to embodiments of the method of the invention;
Figure 5 shows a graphic reflecting the behaviour of some operational parameters of a conventional wind turbine and a suitable range within which to vary pitch angles according to embodiments of the invention; and
Figure 6 schematically illustrates a wind turbine suitable to be operated according to embodiments of the method of the invention.

### DETAILED DESCRIPTION OF EMBODIMENTS OF THE INVENTION

In the following description, numerous specific details are set forth in order to provide a thorough understanding of the present invention. It will be understood by one skilled in the art however, that the present invention may be practiced without some or all of these specific details. In other instances, well known elements have not been described in detail in order not to unnecessarily obscure the description of the present invention.

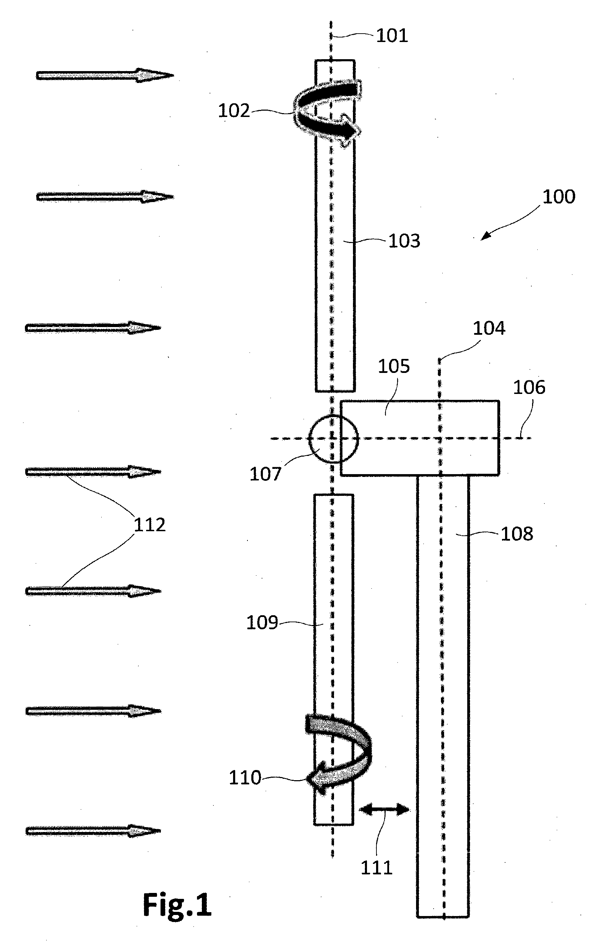

Figure 1 schematically illustrates a lateral view of a wind turbine and how some or all of its blades can be pitched according to embodiments of the invention. This wind turbine 100 comprises a tower 108, a nacelle 105 and a rotor arranged on the tower 108, the rotor having a rotor hub 107 and rotor blades 103, 109. The rotor may also comprise a rotor shaft (not shown) which may be parallel to a horizontal axis of reference 106, which means that the rotor has a tilt angle of zero. Alternatively, in the case of direct drive wind turbines, the rotor may not comprise a rotor shaft, in which case the rotor hub 107 may be directly connected to a corresponding generator and tilted or not (Figure 1 shows the rotor to be not tilted).

The horizontal axis of reference 106 is shown perpendicular to a longitudinal axis 104 of the tower and to a vertical axis 101 common to all the shown blades 103, 109. The blades 103, 109 are straight (not pre-bended) and have a cone angle of zero, as reflected according to the axis 101. Figure 1 also shows an acceptable distance 111 between a blade 109 and the tower 108.

The wind turbine 100 is shown in Figure 1 oriented against the wind 112 (upwind oriented). To this end, the wind turbine 100 may comprise a yaw system (not shown) for properly orienting the rotor against the wind 112. The wind turbine 100 of Figure 1 also comprises a pitch system (not shown) for each of the blades 103, 109 having the role of adjusting the pitch angle of its related blade, at least one azimuth sensor (not shown) for detecting the position of the blades 103, 109, and a control unit (not shown). The control unit may be configured to perform different embodiments of a method aimed at ensuring clearance 111 of the tower.

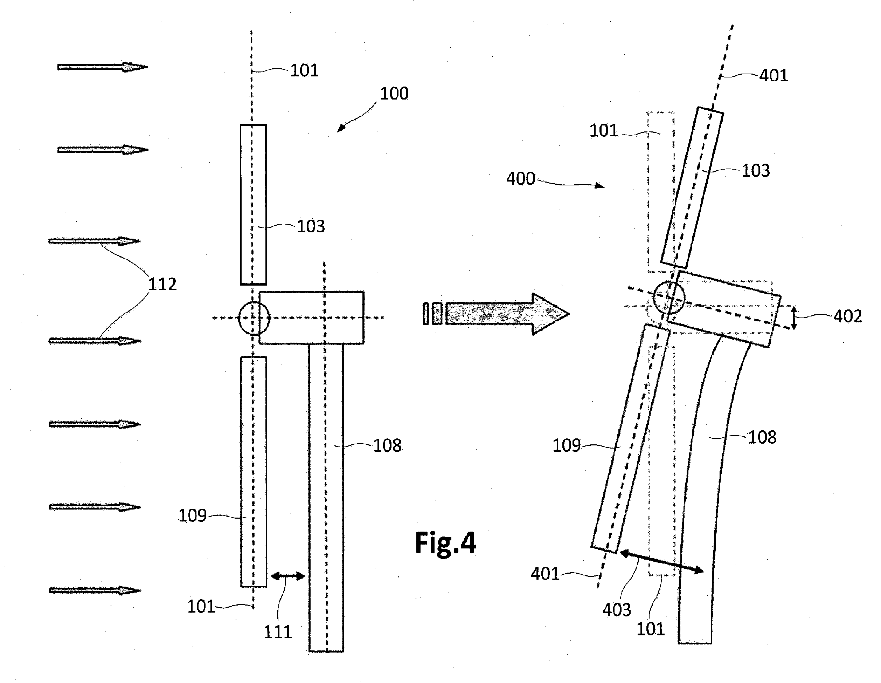

Some of these embodiments of the method may comprise detecting (directly or indirectly through the corresponding azimuth sensor) when a first of the blades 109 substantially approaches the shadow of the tower 108, and decreasing 102 (through the corresponding pitch system) the pitch angle of at least another of the blades 103, which is in or approaching a position above the tower 108. The magnitude of this negative pitching 102 of said at least another of the blades 103 may be such that the angle of attack and wind load on said at least another of the blades 103 are increased to an extent that causes an increase of the tilt angle of the rotor. This effect, which could be called "temporary tilting", will be explained in more detail with reference to Figure 4.

Still according to the same embodiments, the method may further comprise detecting when the first of the blades 109 is substantially close to leaving the shadow of the tower 108, and increasing (through the corresponding pitch system) the pitch angle of the at least another of the blades 103 to decrease the angle of attack and wind load on said at least another of the blades 103 in such a way that the caused increase of the tilt angle of the rotor is cancelled. In other words, the negative pitching 102 described in the previous paragraph is reversed by pitching again the same blade 103 by an equal but opposite amount.

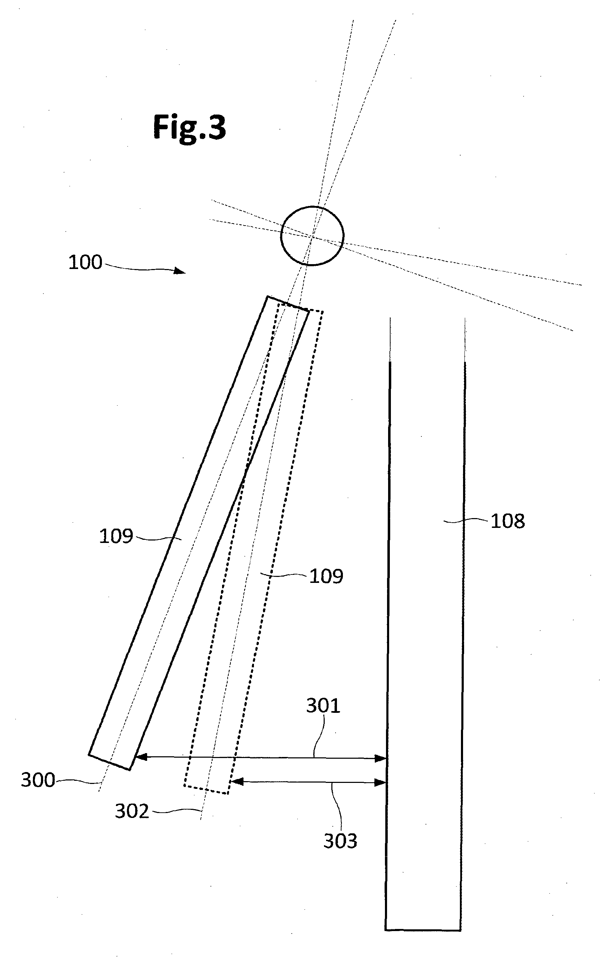

In other embodiments, the method may further comprise, when the first of the blades 109 substantially approaches the shadow of the tower 108, increasing 110 (through the corresponding pitch system) the pitch angle of said first blade 109 to cause a decrease of the angle of attack and wind load on said first blade 109. In these other embodiments, the method may further comprise, when the first of the blades 109 is substantially close to leaving the shadow of the tower 108, decreasing (through the corresponding pitch system) the pitch angle of said first blade 109 in such a way that the caused decrease of the angle of attack and wind load on said first blade 109 is cancelled. The features described in this paragraph produce an effect which may be called "temporary extra tilting" and will be described in more detail with reference to Figure 3.

Detecting when the first of the blades 109 is substantially close to leaving the shadow of the tower 108 may be performed through the corresponding azimuth sensor or, alternatively, by counting the time elapsed from the moment at which the first blade 109 has been detected to substantially approach the shadow of the tower 108, and detecting when said elapsed time is substantially equal to a predefined elapsed time. In embodiments, the method may further comprise obtaining the rotational speed of the rotor, in which case the predefined elapsed time to be used may be selected depending on the obtained rotational speed of the rotor.

As commented before, detecting when the blade 109 approaches the shadow of the tower 108 may be performed directly or indirectly through the corresponding azimuth sensor. A direct detection could be performed by the azimuth sensor providing a signal indicating that the blade 109 is in a predefined position close to the shadow of the tower 108. An indirect detection could be performed by the azimuth sensor providing a signal indicating that the blade 109 is in a predefined position of reference (such as e.g. a horizontal position), and counting the time elapsed from the moment at which the blade 109 has been detected to be in said (e.g. horizontal) position of reference. Then, when said elapsed time is detected to be equal to a predefined elapsed time of reference, the blade 109 may be considered to be approaching the shadow of the tower 108. Different predefined elapsed times of reference depending on the speed of the rotor could be taken into account to detect when the blade 109 is approaching the shadow of the tower 108.

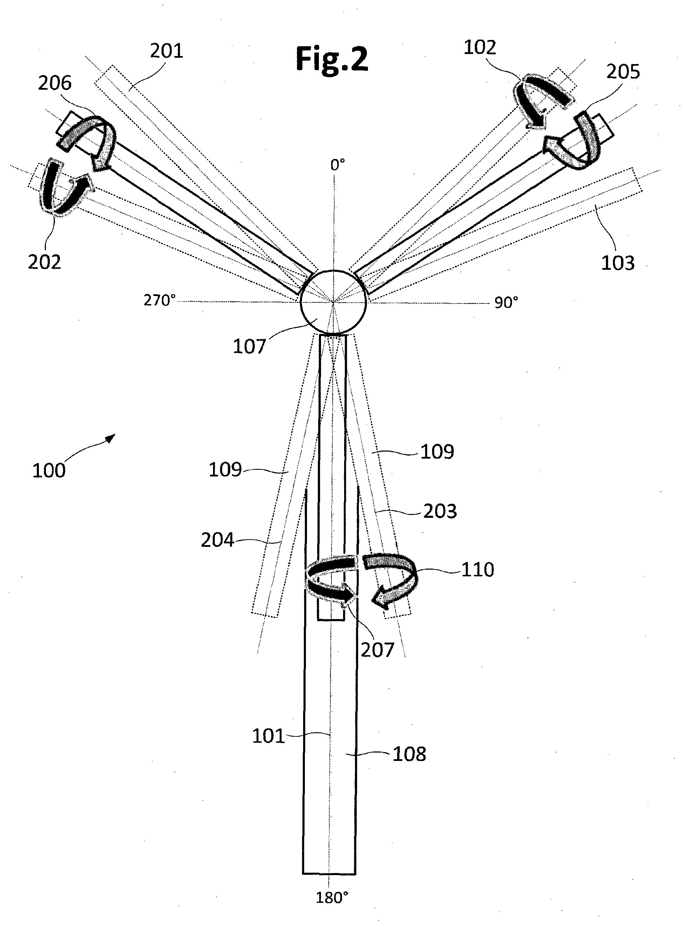

Figure 2 schematically represents a front view of a wind turbine similar to the one shown in Figure 1, and how/when some or all of its blades can be pitched, according to embodiments of the invention. In this case, a wind turbine having three blades 103, 109, 201 is shown. The blade 109 is shown thrice, at three different positions 101, 203, 204, which will be explained later on. These blades 103, 109, 201 are coupled to the rotor hub 107 in such a way that, during operation, whenever a first of the blades 109 is in the shadow of the tower 108, the blades together 103, 109, 201 form a substantially Y-shaped configuration of blades. This figure illustrates that negative pitching 102, 202 of the blades 103, 201 above the tower may start when the blade 109 is in a position 203 close to the shadow of the tower 108, such as e.g. a position corresponding to an azimuth angle of between 165° and 170° (taking into account the 0° indicated in the figure itself). The magnitudes of these negative pitching 102, 202 will be such that a herein called "temporary tilting" (see Figure 4) is achieved.

Figure 2 further illustrates that positive pitching 205, 206 of the blades 103, 201 above the tower may start when the blade 109 is in a position 101 close to leaving the shadow of the tower 108, such as e.g. a position corresponding to an azimuth angle of between 180° and 185°. The magnitudes of these positive pitching 205, 206 will be equal but opposite to the magnitudes of the previously performed negative pitching 102, 202, such that the achieved herein called "temporary tilting" of the rotor (see Figure 4) is cancelled. This positive pitching 205, 206 of the blades 103, 201 above the tower (for cancelling the "temporary tilting") may end when the blade 109 is in a position 204 just after having been in the shadow of the tower 108. Said position 204 out of the shadow of the tower may be e.g. a position corresponding to an azimuth angle of between 190° and 195°.

Figure 2 also shows that the blade 109 can be positively pitched 110 when this blade 109 is in the position 203 close to the shadow of the tower 108 (e.g. between 165° and 170°), such that a herein called "temporary extra tilting" of the rotor is achieved. When the blade 109 is in the position 101 close to leaving the shadow of the tower 108 (e.g. between 180° and 185°), this blade 109 can be negatively pitched 207 by an amount equal but opposite to the amount of the previously performed positive pitching 110, such that the achieved herein called "temporary extra tilting" of the rotor is cancelled. This negative pitching 207 of the blade 109 (for cancelling the "temporary extra tilting") may end when the blade 109 is in a position 204 just after having been in the shadow of the tower 108. Said position 204 out of the shadow of the tower may be e.g. a position corresponding to an azimuth angle of between 190° and 195°.

Figure 4 shows the view of the wind turbine of Figure 1 (with three blades) and how this wind turbine may behave when operated according to embodiments of the method of the invention. In particular, this figure shows the wind turbine 100 of Figure 1 and the same wind turbine 100 in a particular position 400 which is consequence of negatively pitching the (two) blades 103 above the tower 108. As commented before, any rotor supporting structure (tower and other supporting elements) has a certain flexibility, which may vary depending on the design and materials constituting said rotor supporting structure. For example, this flexibility may be due to elastic couplings between a rotor hub and a rotor shaft, and/or between a rotor hub and a generator rotor, etc. Thus, according to this particular known flexibility, the blades 103 above the tower 108 can be pitched such that wind loads on said blades 103 are increased to a sufficient extent to cause an aft flexion of the rotor supporting structure. This aft flexion may cause a temporary tilt angle 402 of the rotor, such that both the blades 103 above the tower 108 and the blade 109 in the shadow of the tower 108 are moved from a substantially vertical position 101 to and aft inclined position 401. It is shown in this figure that the clearance 403 corresponding to this aft inclined position 401 is larger than the clearance 111 corresponding to the vertical position 101 of the blades 103, 109. Thus, this effect produced by temporary negatively pitching the blades 103 above the tower 108 may be seen as a "temporary tilting" of the rotor.

Figure 3 is a schematic representation similar to the one shown in Figure 1, but particularly reflecting a possible effect of pitching a blade in the shadow of the tower according to embodiments of the invention. In this case, only the blade 109 in the shadow of the tower 108 is shown, but in two different positions 302, 300 with respect to the tower 108. The position 302 corresponds to the blade 109 without reduction of loads (with the blade 109 not positively pitched) whereas the position 300 corresponds to the blade 109 positively pitched such that a reduction of loads on the blade 109 is achieved. Wind loads on the blade 109 in the shadow of the tower 108 cause a torque opposing the "tilting" torque caused by extra loading the blades above the tower (Figure 4). So wind loads on the blade 109 may be seen as acting as a brake on the tilt movement caused by extra loading the blades above the tower. Therefore, a temporary reduction of wind loads on the blade 109 (by properly pitching this blade 109) may cause less opposition to the "tilting" torque (caused by extra loading the blades above the tower), which can cause the temporary tilt angle to be even greater. This temporary increased tilt angle may cause the blade 109 to adopt the position 300 which has a clearance 301 with the tower 108 larger than the clearance 303 corresponding to the position 302 (without reduction of loads on the blade 109). Thus, the effect produced by temporary positively pitching the blade 109 may be seen as a "temporary extra tilting" of the rotor.

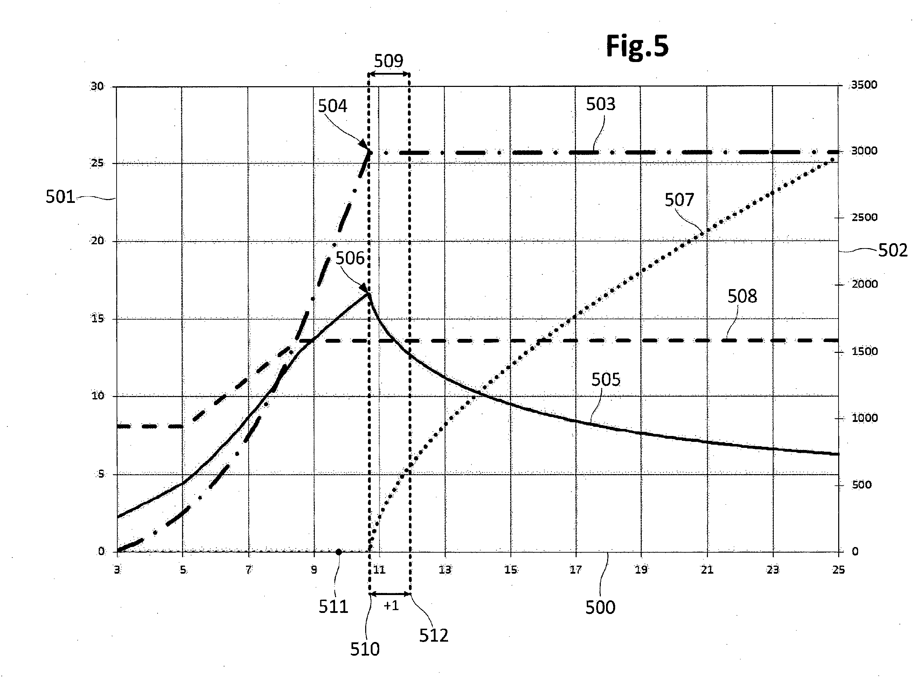

Figure 5 shows a graphic reflecting the behaviour of some operational parameters of a conventional wind turbine and a suitable range within which to vary pitch angles according to embodiments of the invention. In this figure, the horizontal axis 500 refers to the hub wind speed measured in m/s, the left vertical axis 501 refers to rotor speed measured in rpm and to the pitch angle measured in deg., and the right vertical axis 502 refers to the generated electrical power measured in kW and to the thrust on blades measured in kN. This figure shows that the rated electrical power 503 to be generated for this particular case is about 3000 kW, which starts 504 at a hub wind speed close to 11 m/s, which is referenced by 510. This figure also shows the rated rotor speed 508 that permits obtaining the rated electric power 503, and also shows the optimal variation of the pitch angle 507 to maintain said rated rotor speed 508 and electrical power 503 depending on the variation of the hub wind speed 500.

Figure 5 further shows that the thrust 505 on blades takes its maximum value 506 substantially at the same point 510 where the electrical power 503 reaches its rated value 504. Figure 5 permits deriving that said point 510 where the electrical power 503 reaches its rated value 504 is substantially close to the hub wind speed at which the thrust 505 on blades takes its substantially highest value 506. The risk of collision between a blade and the tower may be significant especially when the thrust 505 is maximum 506 or around the maximum 506. So the herein proposed strategies based on causing "temporary tilting" and optionally "temporary extra tilting" may be exclusively applied only when the hub wind speed 500 is detected to be close to the rated wind speed 510. For example, said strategies could be applied when the hub wind speed 500 is within a range 509 between the rated wind speed 510 and the rated wind speed plus 1 m/s 512. Alternative ranges around the rated wind speed, more or less extensive, are possible depending on the particular features of the wind turbine to be operated and on the risk considered to be acceptable.

Figure 5 also illustrates that when the speed of the wind 500 is below the rated wind speed 510, the pitch angle of the blades is normally zero 511, in which case the blades above the tower cannot be pitched to decrease their pitch angle (because it is already zero) to increase thrust and, therefore, wind loads on them. Thus, in this particular situation, only increasing the pitch angle of the blade in the shadow of the tower could be performed, but just to reduce deflections of said blade (in the shadow of the tower). In this last case, neither "temporary tilting" nor "temporary extra tilting" would be caused.

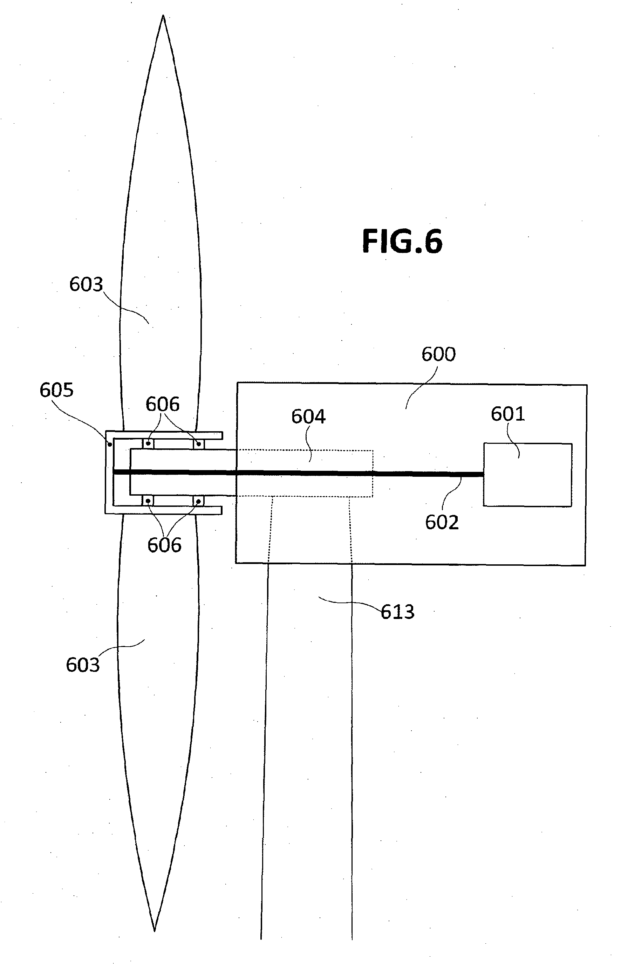

Figure 6 schematically illustrates a wind turbine suitable to be operated according to embodiments of the method of the invention. This wind turbine comprises a tower 613 with a forward extending frame 604, and a nacelle 600 arranged on top of the tower 613. The wind turbine further comprises a main generator 601, and a hub 605 carrying one or more blades 603. A shaft 602 may be provided for transmitting torque from the hub 605 to the main generator 601 when the hub 605 is set into rotation by the wind. The hub 605 may be rotatably mounted on the frame 604 through a plurality of bearings 606 in such a way that the frame 604 is provided at least partially internally of the hub 605.

The configuration of Figure 6 has the advantage of providing a very high stability between the hub 605 and the frame 604, even when the hub 605 rotates at a high speed. The hub 605 and the frame 604 may be rotatably joined through the bearings 606 in such a way that the hub 605 and frame 604 behave substantially as a single body under the cyclical bending loads that may be caused by e.g. the loads on the blades 603 and the weight of the hub 605 and blades 603. The hub 605 and the shaft 602 may be joined through a flexible coupling which may contribute to further reduce the transmission of bending loads from the hub 605 to the shaft 602. In alternative embodiments without such a shaft 602 (i.e. direct drive configurations), this flexible coupling may be provided between the hub 605 and a corresponding rotor of the generator 601.

Therefore, this particular configuration illustrated by Figure 6 allows the rotor shaft 602 and possibly other related elements to avoid loads derived from the herein called "temporary tilting" and optionally "temporary extra tilting" strategies, since said loads will be transmitted (through the frame 604) to the tower 613 and not to the shaft 602 (or to a rotor of the generator 601). As the tower 613 is supposed to be more resistant than the shaft 602, this configuration may permit a better absorption of the loads added by said "temporary tilting" and optionally "temporary extra tilting" strategies.

In any of the described embodiments, pitching of the blades to achieve the herein called "temporary tilting" and optionally "temporary extra tilting" effects may be performed by proper amounts according to the design and materials constituting the wind turbine to be operated. For example, a wind turbine with a rotor supporting structure quite flexible will require pitching the blades to an extent less than that required by a wind turbine having a rotor supporting structure more rigid. Similarly, the position of the blades at which pitching of the blades may start and be reversed may depend on the particular technical features of the wind turbine to be operated. For example, a wind turbine having more powerful and faster pitch systems may start to pitch the blades at a position closer to the shadow of the tower.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. Method of operating a wind turbine (100) having a tower (108), a rotor arranged on the tower (108), a plurality of rotor blades (103, 109, 201), each of the blades (103, 109, 201) having a pitch system for adjusting the pitch angle of the blade (103, 109, 201), and at least one azimuth sensor for detecting the position of the blades (103, 109, 201); the method comprising:
detecting, through the corresponding azimuth sensor, when a first blade (109) substantially approaches the shadow of the tower (108), and pitching, through the corresponding pitch system, at least one other blade (103, 201), which is in or approaching a position above the tower (108), to increase the angle of attack and wind load on said at least one other blade (103, 201) in such a way that an increase of the tilt angle (402) of the rotor is caused;
detecting when the first blade (109) is substantially close to leaving the shadow of the tower (108), and pitching, through the corresponding pitch system, the at least one other blade (103, 201) to decrease the angle of attack and wind load on said at least one other blade (103, 201) in such a way that the previously caused increase of the tilt angle (402) of the rotor is cancelled.

2. Method according to claim 1, wherein the first blade (109) is considered to substantially approach the shadow of the tower (108) when said blade (109) is in a position corresponding to an azimuth angle of between 165° and 170°.

3. Method according to any of claims 1 or 2, wherein the wind turbine (100) comprises at least three rotor blades (103, 109, 201);
wherein pitching the at least one other blade (103, 201), which is in or approaching a position above the tower (108), to increase the angle of attack and wind load on said at least one other blade (103, 201) comprises: pitching at least two other blades (103, 201), which are in or approaching a position above the tower (108), to increase the angle of attack and wind load on said at least two other blades (103, 201); and
wherein pitching the at least one other blade (103, 201) to decrease the angle of attack and wind load on said at least one other blade (103, 201) comprises: pitching the at least two other blades (103, 201) to decrease the angle of attack and wind load on said at least two other blades (103, 201).

4. Method according to any of claims 1 to 3, further comprising:
when the first blade (109) substantially approaches the shadow of the tower (108), pitching, through the corresponding pitch system, said first blade (109) to cause a decrease of the angle of attack and wind load on said first blade (109); and
when the first blade (109) is substantially close to leaving the shadow of the tower (108), pitching, through the corresponding pitch system, said first blade (109) in such a way that the previously caused decrease of the angle of attack and wind load on said first blade (109) is cancelled.

5. Method according to any of claims 1 to 4, wherein detecting when the first blade (109) is substantially close to leaving the shadow of the tower (108) is performed through the corresponding azimuth sensor.

6. Method according to claim 5, wherein the first blade (109) is considered to be substantially close to leaving the shadow of the tower (108) when said blade is in a position corresponding to an azimuth angle of between 180° and 185°.

7. Method according to any of claims 1 to 4, wherein detecting when the first blade (109) is substantially close to leaving the shadow of the tower (108) comprises:
counting the time elapsed from the moment at which the first blade (109) has been detected to substantially approach the shadow of the tower (108); and
detecting when said elapsed time is substantially equal to a predefined elapsed time.

8. Method according to claim 7, wherein detecting when the first blade (109) is substantially close to leaving the shadow of the tower (108) further comprises obtaining the rotational speed of the rotor; and
wherein the predefined elapsed time depends on the obtained rotational speed of the rotor.

9. Method according to any of claims 1 to 8, wherein the wind turbine (100) further comprises means for obtaining the speed of the wind;
wherein the method further comprises detecting when the obtained speed of the wind is closely above the rated wind speed of the wind turbine (100); and
wherein any of the pitching of any of the blades (103, 109, 201) is performed only when the obtained speed of the wind is detected to be closely above the rated wind speed of the wind turbine (100).

10. Method according to claim 9, wherein the obtained speed of the wind is considered to be closely above the rated wind speed of the wind turbine (100) when the obtained speed of the wind is between the rated wind speed and the rated wind speed plus 1 m/s.

11. Method according to any of claims 1 to 10, wherein the method is superposed on a normal individual pitch method.

12. Wind turbine comprising a tower (613), a rotor arranged on the tower (613), a plurality of rotor blades (603), each of the blades (603) having a pitch system for adjusting the pitch angle of the blade (603), at least one azimuth sensor for detecting the position of the blades (603), and a control unit configured to perform a method according to any of claims 1 to 11.

13. Wind turbine according to claim 12, further comprising a rotor hub (605) to which the blades (603) are coupled, and a frame (604) extending forwardly away with respect to the tower (613); wherein the hub (605) is rotatably mounted on the frame (604) in such a way that the frame (604) is provided at least partially internally of the hub (605).

## Patentansprüche

1. Verfahren zum Betrieb einer Windturbine (100), die einen Turm (10), einen auf dem Turm angeordneten Rotor, eine Vielzahl von Rotorblättern (103, 109, 201) hat, wobei jedes Blatt (103, 109, 201) ein Pitchsystem zur Einstellung des Pitchwinkels des Blattes (103, 109, 201) hat, und mindestens einen Azimutsensor zur Ermittlung der Position der Blätter (103, 109, 201) hat; wobei das Verfahren folgendes umfasst:
das Ermitteln, durch den entsprechenden Azimutsensor, wann ein erstes Blatt (109) dem Schatten des Turmes (108) im Wesentlichen näher kommt, und das Pitchen, durch das entsprechende Pitchsystem, von mindestens einem weiteren Blatt (103, 201), welches sich in einer Position oberhalb des Turmes (108) befindet oder der näher kommt, um den Anstellwinkel und die Windlast auf das mindestens eine weitere Blatt (103, 201) zu erhöhen, so dass eine Vergrößerung des Neigungswinkels (402) des Rotors verursacht wird;
das Ermitteln, wann das erste Blatt (109) im Wesentlichen davor steht, den Schatten des Turmes (108) zu verlassen, und das Pitchen, durch das entsprechende Pitchsystem, des mindestens einen weiteren Blattes (103, 201) um den Anstellwinkel und die Windladung auf das mindestens eine weitere Blatt (103, 201) zu verringern, so dass die im Vorfeld verursachte Vergrößerung des Neigungswinkels (402) des Rotors ausgeglichen wird.

2. Verfahren nach Anspruch 1, wobei es betrachtet wird, dass das erste Blatt (109) im Wesentlichen dem Schatten des Turmes (108) näher kommt, wenn das Blatt (109) in einer Position entsprechend einem Azimutwinkel von zwischen 165° und 170° ist.

3. Verfahren nach einem der Ansprüche 1 oder 2, wobei die Windturbine (100) mindestens drei Rotorblätter (103, 109, 201) umfasst;
wobei das Pitchen des mindestens einen weiteren Blattes (103, 201), welches sich in einer Position oberhalb des Turmes (108) befindet oder der näher kommt, um den Anstellwinkel und die Windladung auf das mindestens eine weitere Blatt (103, 201) zu vergrößern, folgendes umfasst: das Pitchen von mindestens zwei weiteren Blättern (103, 201), welche sich in einer Position oberhalb des Turmes (108) befinden oder der näher kommen, um den Anstellwinkel und die Windladung auf die mindestens zwei weiteren Blätter (103, 201) zu vergrößern; und
wobei das Pitchen des mindestens einen weiteren Blattes (103, 201) um den Anstellwinkel und die Windladung auf das mindestens eine weitere Blatt (103, 201) zu verringern folgendes umfasst: das Pitchen der mindestens zwei weiteren Blätter (103, 2012) um den Anstellwinkel und die Windladung auf die mindestens zwei weiteren Blätter (103, 201) zu verringern.

4. Verfahren nach einem der Ansprüche 1 bis 3 weiterhin umfassend:
wenn das erste Blatt (109) im Wesentlichen dem Schatten des Turmes (108) näher kommt, das Pitchen, durch das entsprechende Pitchsystem, des ersten Blattes (109), um eine Verringerung des Anstellwinkels und der Windladung auf das erste Blatt (109) zu verursachen; und
wenn das erste Blatt (109) im Wesentlichen davor steht, den Schatten des Turmes (108) zu verlassen, das Pitchen, durch das entsprechende Pitchsystem, des ersten Blattes (109), so dass die früher verursachte Verringerung des Anstellwinkels und der Windladung auf das erste Blatt (109) ausgeglichen wird.

5. Verfahren nach einem der Ansprüche 1 bis 4, wobei die Ermittlung, wann das erste Blatt (109) im Wesentlichen davor steht, den Schatten des Turmes (108) zu verlassen durch den entsprechenden Azimutsensor durchgeführt wird.

6. Verfahren nach Anspruch 5, wobei es betrachtet wird, dass das erste Blatt (109) im Wesentlichen den Schatten des Turmes (108) verlässt, wenn das Blatt (109) in einer Position entsprechend einem Azimutwinkel von zwischen 180° und 185° ist.

7. Verfahren nach einem der Ansprüche 1 bis 4, wobei die Ermittlung, wann das erste Blatt (109) im Wesentlichen davor steht, den Schatten des Turmes (108) zu verlassen folgendes umfasst:
das Rechnen der abgelaufenen Zeit seitdem es ermittelt worden ist, dass das erste Blatt (109) im Wesentlichen dem Schatten des Turmes (108) näher kommt; und
die Ermittlung, wann die abgelaufene Zeit im Wesentlichen eine vorherbestimmte abgelaufene Zeit gleicht.

8. Verfahren nach Anspruch 7, wobei die Ermittlung, wann das erste Blatt (109) im Wesentlichen davor steht, den Schatten des Turmes (108) zu verlassen weiterhin die Ermittlung der Drehzahl des Rotors umfasst; und
wobei die vorherbestimmte abgelaufene Zeit von der erhaltenen Drehzahl des Rotors abhängt.

9. Verfahren nach einem der Ansprüche 1 bis 8, wobei die Windturbine (100) weiterhin ein Mittel zur Ermittlung der Windgeschwindigkeit umfasst;
wobei das Verfahren weiterhin die Ermittlung umfasst, wann die ermittelte Windgeschwindigkeit dicht über der Nennwindgeschwindigkeit der Windturbine (100) liegt; und
wobei jedes Pitchen jeder Blätter (103, 109, 201) nur durchgeführt wird, wenn es ermittelt wird, dass die ermittelte Windgeschwindigkeit dicht über der Nennwindgeschwindigkeit der Windturbine (100) liegt.

10. Verfahren nach Anspruch 9, wobei es betrachtet wird, dass die ermittelte Windgeschwindigkeit dicht über der Nennwindgeschwindigkeit der Windturbine (100) liegt, wenn die ermittelte Windgeschwindigkeit zwischen der Nennwindgeschwindigkeit und der Nennwindgeschwindigkeit plus 1 m/s liegt.

11. Verfahren nach einem der Ansprüche 1 bis 10, wobei das Verfahren mit einem normalen individuellen Pitchverfahren überlagert wird.

12. Windturbine umfassend einen Turm (613), einen auf dem Turm (613) angeordneten Rotor, eine Vielzahl von Rotorblättern (603), wobei jedes Blatt (603) ein Pitchsystem zur Einstellung des Pitchwinkels des Blattes (603) hat, mindestens einen Azimutsensor zur Ermittlung der Position der Blätter (603), und eine Regeleinheit, die so angeordnet ist, um ein Verfahren nach einem der Ansprüche 1 bis 11 durchzuführen.

13. Windturbine nach Anspruch 12, weiterhin umfassend eine Rotornabe (605) an der die Blätter (603) gekoppelt sind, und einen Rahmen (604), der sich vorwärts bezüglich des Turmes (613) erstreckt; wobei die Nabe (605) drehbar auf dem Rahmen (604) montiert ist, so dass der Rahmen (604) mindestens teilweise innerhalb der Nabe (605) bereitgestellt ist.

## Revendications

1. Procédé d'exploitation d'une éolienne (100) ayant une tour (108), un rotor disposé sur la tour (108), une pluralité de pales (103, 109, 201) de rotor, ayant chacune des pales (103, 109, 201) un système de réglage de pas pour ajuster l'angle de pas de pale (103, 109, 201), et au moins un capteur d'azimut pour détecter la position des pales (103, 109, 201) ; comprenant le procédé :
détecter, moyennant le capteur d'azimut correspondant, le moment où une première pale (109) se rapproche essentiellement de l'ombre de la tour (108), et régler, moyennant le correspondant système de réglage, le pas d'au moins une autre pale (103, 201) qui est à ou se rapproche d'une position sur la tour (108), afin d'augmenter l'angle d'attaque et la charge de vent sur ladite au moins une autre pale (103, 201) de façon qu'une augmentation de l'angle d'inclinaison (402) du rotor est entraînée ;
détecter le moment où la première pale (109) est essentiellement près d'abandonner l'ombre de la tour (108), et régler, moyennant le système de réglage correspondant, le pas d'au moins une autre pale (103, 201) afin de diminuer l'angle d'attaque et la charge de vent sur ladite au moins une autre pale (103, 201) de façon que l'augmentation avant entraînée de l'angle d'inclinaison (402) du rotor est annulée.

2. Procédé selon la revendication 1, dans lequel la première pale (109) est considérée comme étant se rapprochant essentiellement de l'ombre de la tour (108) lorsque ladite pale (109) est dans une position correspondante à un angle d'azimut d'entre 165° et 170°.

3. Procédé selon l'une quelconque des revendications 1 ou 2, dans lequel l'éolienne (100) comprend au moins trois pales de rotor (103, 109, 201) ;
dans lequel le réglage du pas de l'au moins une autre pale (103, 201), qui est à ou se rapproche d'une position sur la tour (108), afin d'augmenter l'angle d'attaque et la charge de vent sur ladite au moins une autre pale (103, 201) comprend : régler le pas d'au moins deux autres pales (103, 201) qui sont à ou se rapprochent d'une position sur la tour (108), afin d'augmenter l'angle d'attaque et la charge de vent sur lesdites au moins deux autres pales (103, 201) ; et
dans lequel le réglage du pas d'au moins une autre pale (103, 201) afin de diminuer l'angle d'attaque et la charge de vent sur ladite au moins une autre pale (103, 201) comprend : régler le pas des au moins deux autres pales (103, 201) afin de diminuer l'angle d'attaque et la charge de vent sur lesdites au moins deux autres pales (103, 201).

4. Procédé selon l'une quelconque des revendications 1 à 3, comprenant en outre :
lorsque la première pale (109) se rapproche essentiellement de l'ombre de la tour (108), régler, moyennant le correspondant système de réglage, le pas de ladite première pale (109) afin d'entraîner une diminution de l'angle d'attaque et de la charge de vent sur ladite première pale (109) ; et
lorsque la première pale (109) est essentiellement près d'abandonner l'ombre de la tour (108), régler, moyennant le correspondant système de réglage, ladite première pale (109) de façon que la diminution avant entraînée de l'angle d'attaque et de la charge de vent sur ladite première pale (109) est annulée.

5. Procédé selon l'une quelconque des revendications 1 à 4, dans lequel la détection du moment où la première pale (109) est essentiellement près d'abandonner l'ombre de la tour (108) est effectuée moyennant le correspondant capteur d'azimut.

6. Procédé selon la revendication 5, dans lequel la première pale (109) est considérée comme étant essentiellement près d'abandonner l'ombre de la tour (108) lorsque ladite pale est dans une position correspondante à un angle d'azimut d'entre 180° et 185°.

7. Procédé selon l'une quelconque des revendications 1 à 4, dans lequel la détection du moment où la première pale (109) est essentiellement près d'abandonner l'ombre de la tour (108) comprend :
compter le temps passé dès le moment où la première pale (109) a été détectée comme étant se rapprochant essentiellement de l'ombre de la tour (108) ; et
détecter le moment où ledit temps passé est essentiellement égal à un temps passé prédéterminé.

8. Procédé selon la revendication 7, dans lequel la détection du moment où la première pale (109) est essentiellement près d'abandonner l'ombre de la tour (108) comprend en outre obtenir la vitesse de rotation du rotor ; et
dans lequel le temps passé prédéterminé dépend de la vitesse de rotation du rotor obtenue.

9. Procédé selon l'une quelconque des revendications 1 à 8, dans lequel l'éolienne (100) comprend en outre un moyen pour obtenir la vitesse du vent ;
dans lequel le procédé comprend en outre détecter le moment où la vitesse du vent obtenue est près au-dessus de la vitesse nominale du vent de l'éolienne (100) ; et
dans lequel un réglage de pas quelconque d'une quelconque des pales (103, 109, 201) est effectué seulement lorsque la vitesse du vent obtenue est détectée comme étant près au-dessus de la vitesse nominale du vent de l'éolienne (100).

10. Procédé selon la revendication 9, dans lequel la vitesse du vent obtenue est considérée comme étant près au-dessus de la vitesse nominale du vent de l'éolienne (100) lorsque la vitesse du vent obtenue est entre la vitesse nominale du vent et la vitesse nominale du vent plus 1 m/s.

11. Procédé selon l'une quelconque des revendications 1 à 10, dans lequel le procédé est superposé à un procédé de réglage de pas de pale individuel normal.

12. Éolienne comprenant une tour (613), un rotor disposé sur la tour (613), une pluralité de pales (603) de rotor, ayant chacune des pales (603) un système de réglage pour ajuster l'angle de pas de la pale (603), au moins un capteur d'azimut pour détecter la position des pales (603), et une unité de commande configurée pour effectuer un procédé selon l'une quelconque des revendications 1 à 11.

13. Éolienne selon la revendication 12, comprenant en outre un moyeu (605) de rotor auquel les pales (603) sont couplées, et un châssis (604) s'étendant en avant par rapport à la tour (613) ; dans laquelle le moyeu (605) est monté de façon rotative sur le châssis (604) de façon que le châssis (604) est fourni au moins partiellement dans l'intérieur du moyeu (605).
